# FASCICULE DE BREVET EUROPEEN

(11) **EP 3 169 818 B1**
(45) Date de publication et mention de la délivrance du brevet: **17.10.2018**
(21) Numéro de dépôt: 15738897.6
(22) Date de dépôt: 15.07.2015
(51) Int. Cl.: C22B 3/26, C22B 3/00

(54) **PROCÉDÉ DE SÉPARATION DU PALLADIUM DES AUTRES ÉLÉMENTS MÉTALLIQUES PRÉSENTS DANS UNE PHASE AQUEUSE NITRIQUE ET SES UTILISATIONS**
VERFAHREN ZUR TRENNUNG VON PALLADIUM VON DEN ANDEREN METALLISCHEN ELEMENTEN IN EINER WÄSSRIGEN STICKSTOFFPHASE UND VERWENDUNGEN DAVON
PROCESS FOR SEPARATING PALLADIUM FROM THE OTHER METAL ELEMENTS PRESENT IN A NITRIC AQUEOUS PHASE AND USES THEREOF

(30) Priorité: 17.07.2014 FR 1456878
(43) Date de publication de la demande: 24.05.2017
(73) Titulaire: Commissariat à l'Énergie Atomique et aux Énergies Alternatives, 75015 Paris (FR)
(72) Inventeur: BOURGEOIS, Damien, F-30390 Aramon (FR); MEYER, Daniel, F-30150 Saint Genies de Comolas (FR); POIROT, Rémi, F-84000 Avignon (FR)
(74) Mandataire: Brevalex
(86) Numéro de dépôt international: PCT/EP2015/066184
(87) Numéro de publication internationale: WO 2016/008932

(56) Documents cités:
- COURSON O ET AL: "Partitioning of minor actinides from HLLW using the DIAMEX process.Part 1 - Demonstration of extraction performances and hydraulic behaviour of the solvent in a continuous process", RADIOCHIMICA ACTA, OLDENBOURG WISSENSCHAFTSVERLAG GMBH MUNICH, DE, vol. 88, no. 12, 1 janvier 2000 (2000-01-01), pages 857-863, XP009181063, ISSN: 0033-8230
- RÉMI POIROT ET AL: "Palladium Extraction by a Malonamide Derivative (DMDOHEMA) from Nitrate Media: Extraction Behavior and Third Phase Characterization", SOLVENT EXTRACTION AND ION EXCHANGE, TAYLOR & FRANCIS GROUP LLC, US, vol. 32, no. 5, 28 avril 2014 (2014-04-28) , pages 52-542, XP009181062, ISSN: 0736-6299 cité dans la demande

## Description

### DOMAINE TECHNIQUE

La présente invention appartient au domaine technique du recyclage du palladium et, plus particulièrement, à l'utilisation d'un malonamide comme extractant pour augmenter le facteur de séparation entre le palladium et les autres éléments métalliques contenus dans une solution aqueuse nitrique, issue notamment du recyclage des déchets d'équipements électriques et électroniques et ce, dans une opération d'extraction liquide-liquide.

Plus particulièrement, la présente invention propose un procédé permettant de séparer puis de récupérer sélectivement le palladium présent, dans une solution aqueuse nitrique, en mélange avec d'autres éléments métalliques et ce, en utilisant comme extractant un malonamide. La présente invention trouve des applications dans le traitement des déchets d'équipements électriques et électroniques et leur recyclage.

### ÉTAT DE LA TECHNIQUE ANTÉRIEURE

Le palladium (Pd) est un métal semi-précieux dont l'approvisionnement reste stratégique en raison d'une localisation géographique des gisements et, par conséquent, de la production, limitée à quelques pays (principalement Russie 41% et Afrique du Sud 36%). En outre, même si le palladium n'apparait pas comme un métal stratégique dans les analyses de l'UE, des tensions peuvent exister sur le marché du palladium en raison de la fin des stocks détenus par la Russie qui permettaient de détendre le marché, ainsi que de l'accroissement régulier de la demande en palladium. Aussi, l'ensemble des métaux du groupe du platine, notamment le platine (Pt), le palladium et le rhodium (Rh) est lui considéré comme stratégique par l'UE et les USA, plutôt en raison du platine, mais la production de ces trois métaux est intimement liée.

Le palladium est un métal qui présente des propriétés catalytiques intéressantes, et une bonne résistance à la corrosion. Il sert principalement dans la confection de pots catalytiques pour l'automobile (67%). Les autres applications sont : l'électronique (12%), l'industrie chimique (5%), la réparation dentaire (5%) et la joaillerie (4%). Ce métal noble sert aussi de placement financier (10% de la demande en 2010, quantité négligeable en 2013). L'évolution de la demande en palladium est essentiellement assurée par la croissance du marché automobile.

On estime à un quart environ la quantité de palladium consommée annuellement provenant du recyclage. Ce recyclage concerne exclusivement les pots catalytiques, une source homogène de palladium, traitée en milieu chlorhydrique. L'exploitation de nouvelles filières de recyclage devrait donc être un domaine d'intérêt économique prochain. La valorisation des déchets d'équipements électriques et électroniques (ou DEEE) également désignés par l'expression « la mine urbaine » est une thématique en plein essor, et représente une source potentielle importante de palladium (deuxième marché d'application). Les études de recyclage de ces matériaux se dirigent selon deux axes : pyrochimie/pyrométallurgie et hydrométallurgie. En ce qui concerne l'hydrométallurgie, différentes technologies peuvent être employées comme, par exemple, l'extraction liquide-liquide, l'électrochimie, les membranes liquides supportées ou encore les résines échangeuses d'ions.

Dans le cas de l'hydrométallurgie, l'or présent dans les circuits imprimés impose une dissolution en milieu acide oxydant, et le seul acide chlorhydrique utilisé pour le recyclage des pots catalytiques ne convient plus. Plusieurs solutions sont envisagées, comme les mélanges chlorhydrique/nitrique ou sulfurique/eau oxygénée. Le milieu nitrique seul a été peu étudié dans le cadre du recyclage des DEEE.

Le comportement du palladium en extraction liquide-liquide a été très bien décrit en milieu chlorhydrique, car c'est cet acide qui sert à l'attaque du minerai, et impose un traitement des raffinats contenant du palladium dans ce même milieu. De nombreux systèmes extractants ont été développés, ils sont très efficaces pour une extraction sélective du palladium **[1].** La plupart ont également été évalués en milieu nitrique dans le cadre du retraitement de déchets nucléaires, le palladium étant l'un des métaux de transition les plus importants en quantité dans les produits de fission **[2,3]** :
- Les alkyle-sulfures, disponibles à l'échelle industrielle, tels que, par exemple, le dioctylsulfure (ou DOS) et le dihexylsulfure (ou DHS), possèdent aussi une sélectivité pour le Pd remarquable en milieu nitrique **[4]** et ont été étudiés dans le cadre d'une co-extraction du Pd et du Rh **[5].** En conséquence, des poly-sulfures plus complexes ont été proposés **[6].** Mais ces molécules peuvent afficher des cinétiques lentes **[7]** et surtout se dégradent progressivement en milieu nitrique **[6,8].**
- Les sulfoxydes, produits par la mono-oxydation des sulfures, que l'on anticipe bien plus stables en milieu nitrique, sont aussi efficaces pour l'extraction du Pd. Le dioctylsulfoxyde (ou DOSO) **[9]** et le bis(2-éthylhexyl)sulfoxyde (ou BESO) **[10]** ont été testés avec succès, mais, jusqu'à présent, jamais développés.
- Les hydroxyoximes conviennent, mais ne fonctionnent qu'en milieu aromatique **[11].**
- Les amines ou sels d'ammoniums sont quant à eux efficaces, mais sur une zone de pH limitée **[12].**
- Les dérivés phosphorés peuvent aussi convenir pour l'extraction du Pd en milieu nitrique. Les oxydes d'alkyle phosphine, stables vis-à-vis de l'oxydation en milieu nitrique, sont nettement moins efficaces dans ce milieu qu'en milieu chlorhydrique ou en milieu sulfurique **[13].** Les sulfures de phosphine donnent de meilleurs résultats, mais leur efficacité baisse quand la concentration en nitrate augmente. De plus, ils présentent des coefficients de distribution modestes dès que la concentration en acide nitrique dépasse 1 mol.L⁻¹ **[14].**

Le comportement relatif des cations métalliques changeant drastiquement d'un milieu à l'autre, des systèmes non conventionnels, c'est-à-dire qui n'ont pas été développés dans le cadre de l'extraction du Pd à partir du minerai, ont été proposés pour l'extraction en milieu nitrique :
- Les cétones, composés disponibles industriellement, qui ne fonctionnent pas en milieu chlorhydrique, peuvent donner de bons résultats en milieu nitrique, mais à de fortes concentrations (3 mol.L⁻¹) et ce, avec un choix restreint de diluants (nitrobenzène) **[15].**
- Des thio- et dithio-diglycolamides ont été préparés et testés, mais seulement à l'échelle du laboratoire, ils donnent néanmoins de bons résultats **[16]** et sont décrits comme stables en milieu nitrique **[17].** A noter que les thio-diglycolamides peuvent aussi être appelés diamides soufrés. Ils ont été conçus spécialement pour extraire le palladium par introduction d'atomes de soufre, et ce sont ces derniers qui sont responsables du comportement de l'extractant.

Courson et al. 2000 (Radiochimica Acta, vol. 88, pages 857-863) décrit un procédé de séparation des actinides mineurs à partir à de déchets liquides hautement radioactifs ou de solution simulant de tels déchets. Ce procédé met en oeuvre une phase aqueuse nitrique contenant les actinides mineurs et entre 2,9 et 3,5 mol.L⁻¹ d'acide nitrique et une phase organique contenant un malomalonamide exempt de soufre qu'est le *N,N*'-diméthyl-*N,N*'-dibutyltétradécylmalonamide (ou DMDBTDMA).

Pour résumer, à l'heure actuelle, aucun système décrit et disponible à échelle industrielle ne permet d'extraire le palladium d'un milieu nitrique de manière satisfaisante, c'est-à-dire avec (1) efficacité : taux d'extraction important (supérieur à 75%), cinétique d'extraction de l'ordre de 1 h maximum, (2) sélectivité : facteur de sélectivité de 10 minimum avec d'autres cations de valence +2 et/ou +3, (3) souplesse d'utilisation : choix de diluants variés et (4) stabilité en milieu nitrique (acide et oxydant) même concentré (3 à 6 M).

Aussi, les inventeurs se sont donc fixé pour but de fournir un procédé qui, tout en permettant de séparer et de purifier efficacement et sélectivement le palladium contenu dans une solution aqueuse nitrique contenant du palladium et d'autres cations tels que des cations métalliques, soit exempt des inconvénients mentionnés ci-dessus.

### EXPOSÉ DE L'INVENTION

Ce but et d'autres encore sont atteints par la présente invention qui propose un procédé de séparation du palladium des autres éléments métalliques contenus dans une phase aqueuse nitrique via une extraction liquide-liquide utilisant une phase organique contenant, comme extractant, un malonamide exempt d'atome de soufre et une phase aqueuse nitrique présentant une teneur en acide nitrique ajustée.

Plus particulièrement, le procédé de séparation du palladium des autres éléments métalliques contenus dans une phase aqueuse nitrique consiste :
- à mettre en contact une phase aqueuse nitrique contenant, en plus du palladium, au moins un autre cation métallique dont la valence est supérieure ou égale à 2 avec une phase organique non miscible à l'eau puis
- à séparer la phase aqueuse nitrique et la phase organique dans laquelle du palladium a été extrait,
ladite phase organique contenant au moins un malonamide exempt d'atome de soufre en tant qu'extractant et ladite phase aqueuse nitrique contenant au plus 2,5 mol.L⁻¹ d'acide nitrique.

Il est à noter que l'utilisation d'une phase organique contenant un malonamide pour séparer, récupérer ou extraire du palladium d'une phase aqueuse dans laquelle il se trouve n'est pas nouvelle en soi. Les malonamides ont été testés avec succès à l'échelle pilote dans plusieurs procédés en milieu nitrique et il a été montré que le palladium est bien extrait par les malonamides. De plus, le comportement du palladium en extraction liquide-liquide par le *N,N'*-diméthyl-*N,N'*-dioctylhexyléthoxymalonamide (ou DMDOHEMA) vient de faire l'objet d'une publication **[18].** Enfin, il a déjà été établi que le palladium est co-extrait, lors d'un procédé de récupération sélective de l'américium développé par la Demanderesse, avec les lanthanides, ce qui nécessite l'ajout d'acide N-(2-hydroxyéthyl)éthylène diamine triacétique (ou HEDTA) dans la phase aqueuse **[19].** En milieu chlorhydrique, le palladium peut aussi être extrait par certains malonamides comme le *N,N*'-dimethyl-*N,N'*-diphenyltetradecyl malonamide (ou DMDPHTDMA), mais en présence d'étain au degré d'oxydation +Il **[20].**

Ce qui, par contre, est tout à fait nouveau est le fait d'utiliser une phase organique contenant un malonamide et, plus particulièrement, un malonamide qui ne contient pas d'atome de soufre pour séparer et purifier sélectivement le palladium contenu en mélange avec d'autres éléments métalliques dans une solution aqueuse nitrique. En effet, dans toutes les données disponibles, soit le palladium est co-extrait avec les lanthanides, soit il est séquestré en phase aqueuse et les lanthanides sont extraits. Les malonamides et, plus particulièrement, les malonalides dépourvus d'atomes de soufre ne sont pas connus pour être des extractants spécifiques du palladium : ils ont été développés dans le cadre de l'extraction des lanthanides et des actinides, des cations définis comme des « cations durs » selon la théorie HSAB (pour « Hard and Soft Acid and Base », théorie développée par Pearson **[21]**), alors que le palladium est un cation classé comme « mou ». Ainsi, rien ne suggérait à l'homme du métier d'utiliser un malonamide pour récupérer sélectivement le palladium à partir d'une solution aqueuse nitrique contenant d'autres cations métalliques. Il est donc assez surprenant de constater que le palladium peut être extrait, de manière sélective, par rapport à plusieurs cations métalliques, dont les lanthanides, simplement en ajustant la teneur en acide nitrique de la phase aqueuse (cf exemple 1 ci-après).

Dans le procédé selon la présente invention, si la phase aqueuse nitrique contient un ou plusieurs lanthanides, ces derniers restent dans la solution aqueuse nitrique, suite à la mise en contact avec la phase organique contenant au moins un malonamide comme extractant. De plus, le procédé selon la présente invention ne nécessite pas d'ajouter un quelconque complexant sélectif des autres cations multivalents présents dans la phase aqueuse nitrique, tel que, par exemple, l'EDTA.

Enfin, il convient de noter que les travaux des inventeurs réalisés en remplaçant les extractants utilisés dans la phase organique dans le procédé selon l'invention, i.e. les malonamides, par une autre famille d'extractants solvatants que sont les diglycolamides ont permis de montrer qu'aucune séparation/récupération sélective du palladium n'est possible avec ces derniers.

On rappelle que, dans le domaine des extractions liquide-liquide, c'est-à-dire utilisant la différence de solubilité des éléments chimiques que l'on cherche à séparer entre une phase aqueuse et une phase organique :
- le coefficient de distribution entre deux phases, organique et aqueuse, d'un élément métallique M, noté D_{M}, correspond au rapport entre la concentration (ou activité) que présente cet élément dans la phase organique et la concentration que présente ce même élément dans la phase aqueuse ;
- le facteur d'extraction d'un élément métallique M, noté E_{M}, correspond à O/A * D_{M}, c'est-à-dire au produit du rapport entre le volume ou le débit (si les phases mises en présence sont circulantes) de la phase organique et le volume ou le débit de la phase aqueuse par le coefficient de distribution D_{M} de ce même élément; et
- le facteur de séparation entre deux éléments métalliques M1 et M2, noté FS_{M1/M2} correspond à D_{M1}/D_{M2}, c'est-à-dire au rapport entre le coefficient de distribution de l'élément M1 et le coefficient de distribution de l'élément M2.

Dans le cadre de la présente invention, la phase aqueuse nitrique utilisée se caractérise par la présence de différents éléments métalliques parmi lesquels on trouve du palladium et au moins un autre cation métallique dont la valence est supérieure ou égale à 2 et par la quantité ajustée d'acide nitrique.

La quantité d'acide nitrique dans la phase aqueuse nitrique est inférieure ou égale à 2,5 mol.L⁻¹ et, en particulier comprise entre 0,1 mol.L⁻¹ et 2 mol.L⁻¹. Dans un mode de réalisation particulier, la solution aqueuse nitrique mise en oeuvre dans le cadre de la présente invention contient de l'acide nitrique à une concentration de l'ordre de 1 mol.L⁻¹ (i.e. 1 mol.L⁻¹ ± 0,25 mol.L⁻¹). Les quantités d'acide nitrique précédemment données s'entendent préalablement à la mise en contact avec la phase organique. En effet, une certaine quantité d'acide nitrique peut être extraite dans la phase organique par l'extractant malonamide.

Toute phase aqueuse nitrique contenant différents éléments métalliques parmi lesquels on trouve du palladium et au moins un autre cation métallique dont la valence est supérieure ou égale à 2 est utilisable dans le cadre de la présente invention. La phase aqueuse nitrique utilisée dans le cadre du procédé selon l'invention est avantageusement une solution aqueuse nitrique issue du traitement des déchets d'équipements électriques et électroniques. Ainsi, cette phase aqueuse nitrique comprend non seulement du palladium mais aussi au moins un élément métallique choisi dans le groupe constitué par le fer (Fe), le cuivre (Cu), le zinc (Zn), l'aluminium (Al), le plomb (Pb), le nickel (Ni), l'argent (Ag), l'étain (Sn), le cobalt (Co), le néodyme (Nd), le lanthane (La), le dysprosium (Dy), l'ytterbium (Yb) et le chrome (Cr). La quantité de chacun de ces éléments métalliques et notamment la quantité de palladium dans la phase aqueuse nitrique dépendra de l'origine de la phase aqueuse nitrique et notamment de la nature des déchets d'équipements électriques et électroniques et du traitement qu'ils ont subi.

Typiquement, les déchets d'équipements électriques et électroniques sont broyés, éventuellement soumis à une attaque acide, par exemple, par de l'acide chlorhydrique ou de l'acide sulfurique puis soumis à une attaque oxydante par de l'acide nitrique notamment à une quantité comprise entre 3 mol.L⁻¹ et 6 mol.L⁻¹ et ce, afin de dissoudre des éléments métalliques tels que l'or, l'argent, le palladium et certains lanthanides. La phase aqueuse nitrique mise en oeuvre dans le procédé selon la présente invention correspond donc à la solution obtenue suite à un tel traitement i.e. une eau de lixiviation des broyats de déchets d'équipements électriques et électroniques.

Cette phase aqueuse peut éventuellement avoir subi un prétraitement pour en retirer déjà certains cations métalliques. En effet, selon le procédé choisi, certains éléments majoritaires comme le cuivre ou le fer, ou encore l'or pour son importante valeur, peuvent être sélectivement extraits par des techniques classiques d'hydrométallurgie. A titre d'exemple, Jung *et al* ont proposé un procédé de récupération sélective préalable de l'or utilisant du dibutyl carbitol comme extractant **[22],** qui conduit à une solution acide résiduelle comprenant du palladium mélangé à d'autres cations comme le zinc, le cuivre, l'argent ou le platine.

De façon générale et notamment eu égard à ce qui précède, le palladium présent dans la phase aqueuse nitrique préalablement à la mise en oeuvre du procédé de préparation se présente sous forme oxydée i.e. sous forme de cations Pd²⁺.

De plus, le fait que la phase aqueuse nitrique mise en oeuvre dans le procédé selon la présente invention doive contenir une quantité en acide nitrique telle que précédemment définie i.e. inférieure ou égale à 3 mol.L⁻¹ apparait comme un compromis optimal : la dissolution lors de l'attaque oxydante des déchets d'équipements électriques et électroniques s'opère à des concentrations en acide nitrique relativement élevées (3 mol.L⁻¹ minimum), donc l'ajustement à une concentration plus faible peut s'envisager par simple dilution. Dans ce cas, travailler à une quantité d'acide nitrique dans la phase aqueuse nitrique de 1 mol.L⁻¹ permet à la fois de ne pas opérer de dilution trop importante, tout en garantissant une excellente sélectivité.

La phase aqueuse nitrique mise en oeuvre dans le procédé selon la présente invention peut ne contenir, comme acide, que de l'acide nitrique. En variante, cette phase aqueuse nitrique peut contenir, en plus de l'acide nitrique, au moins un autre acide notamment choisi dans le groupe constitué par l'acide chlorhydrique, l'acide bromhydrique, l'acide fluorhydrique et l'acide sulfurique. De plus, que cette phase aqueuse nitrique contienne ou non au moins un autre acide différent de l'acide nitrique, elle peut en outre contenir de l'eau oxygénée (ou H₂O₂).

Dans le cadre du procédé de séparation selon la présente invention, l'extractant contenu dans la phase organique non miscible à l'eau se présente sous la forme d'un malonamide exempt d'atome de soufre ou de plusieurs malonamides exempts d'atome de soufre différents. Ce ou ces dernier(s) est/sont capable(s) de former des complexes avec le palladium présent dans la phase aqueuse nitrique et, plus particulièrement, avec le nitrate de palladium présent dans cette phase.

Dans le cadre de la présente invention, sont explicitement exclus, des extractants utilisés seuls, les diamides soufrés tels que les dithiodiglycolamides précédemment évoqués. A noter qu'un tel diamide soufré ou un mélange de diamides soufrés différents peuvent cependant être utilisés, dans le cadre de la présente invention, en mélange avec au moins un malonamide exempt d'atome de soufre.

Par « malonamide exempt d'atome de soufre », on entend un diamide substitué de formule (I) :

R¹(R²)N-C(=O)-CH(R³)-C(=O)-N(R⁴)R⁵ (I)

dans laquelle les groupements R¹, R², R³, R⁴ et R⁵, identiques ou différents, représentent un alkyle ou un hétéroalkyle, exempt d'atome de soufre.

Dans le cadre de la présente invention, on entend, par « groupe alkyle », un groupe alkyle, linéaire, ramifié ou cyclique, comprenant de 1 à 20 atomes de carbone, notamment de 1 à 15 atomes de carbone et en particulier, de 1 à 10 atomes de carbone.

Dans le cadre de la présente invention, on entend, par « groupe hétéroalkyle », un groupe hétéroalkyle, linéaire, ramifié ou cyclique, comprenant de 1 à 20 atomes de carbone, notamment de 1 à 15 atomes de carbone et en particulier, de 1 à 10 atomes de carbone, le ou les hétéroatomes pouvant être un atome d'azote, un atome d'oxygène ou un atome de phosphore, notamment un atome d'azote ou un atome d'oxygène et, en particulier, un atome d'oxygène. Le ou les hétéroatome(s) peu(ven)t en particulier interrompre une chaîne alkyle et/ou séparer une chaîne alkylène et une chaîne alkyle. En particulier, dans le cadre de la présente invention, un hétéroalkyle est un alkyle tel que précédemment défini interrompu par un atome d'oxygène.

Conformément à l'invention, le malonamide exempt d'atome de soufre mis en oeuvre est, de préférence, choisi parmi les malonamides dans lesquels le nombre total d'atomes de carbone que présentent ensemble les groupements R¹, R², R³, R⁴ et R⁵ est supérieur ou égal à 20 et notamment supérieur ou égal à 22. En effet, de tels malonamides présentent un caractère hydophobe suffisant pour être utilisé en phase organique non miscible à l'eau.

Avantageusement, le malonamide exempt d'atome de soufre mis en oeuvre dans le cadre de la présente invention est un malonamide de formule (I) telle que précédemment définie dans laquelle les groupements R¹ et R⁵ sont identiques et les groupements R² et R⁴ sont identiques, les groupements R¹ et R⁴ pouvant être identiques ou différents.

En particulier, le malonamide exempt d'atome de soufre mis en oeuvre dans le cadre de la présente invention est un malonamide de formule (I) telle que précédemment définie dans laquelle les groupements R¹, R², R⁴ et R⁵ sont tels que précédemment définis et dans laquelle le groupement R³ est un alkyle ou un hétéroalkyle et notamment un alkyle interrompu par un atome d'oxygène.

Plus particulièrement, le malonamide exempt d'atome de soufre mis en oeuvre dans le cadre de la présente invention est choisi dans le groupe constitué par le *N,N*'-diméthyl-*N,N*'-dibutyltétradécylmalonamide (ou DMDBTDMA), le *N,N'*-diméthyl-*N,N'-*dioctylhexyléthoxymalonamide (ou DMDOHEMA), le *N,N'*-diméthyl-*N,N'-*dioctyloctylmalonamide (ou DMDOOMA), le *N,N'*-diméthyl-*N,N'*-dioctylhexylmalonamide (ou DMDOHxMA), le *N,N'*-diméthyl-*N,N'*-dioctylheptylmalonamide (ou DMDOHpMA) ou le *N,N'*-diméthyl-*N,N'*-dibutyl-dodécylmalonamide (ou DMDBDDEMA).

Plus particulièrement encore, le malonamide exempt d'atome de soufre mis en oeuvre dans le cadre de la présente invention est le DMDOHEMA.

Dans le cadre du procédé de séparation de l'invention, le malonamide exempt d'atome de soufre est présent dans la phase organique en une quantité supérieure ou égale à 40 mM, notamment en une quantité supérieure ou égale à 60 mM, en particulier en une quantité comprise entre 80 mM et 2 M et, plus particulièrement, en une quantité comprise entre 100 mM et 1 M. Lorsque la phase organique comprend plusieurs malonamides différents et notamment plusieurs malonamides exempts d'atome de soufre différents, la quantité totale de malonamides dans la phase organique est supérieure ou égale à 40 mM, notamment supérieure ou égale à 60 mM, en particulier comprise entre 80 mM et 2 M et, plus particulièrement, comprise entre 100 mM et 1 M.

Enfin, la phase organique non miscible à l'eau utilisée dans le cadre de la présente invention contient au moins un malonamide exempt d'atome de soufre tel que précédemment défini, comme extractant, dans un diluant organique. Avantageusement, ce diluant organique est choisi parmi les diluants organiques polaires ou aliphatiques dont l'utilisation a déjà été proposée pour la réalisation d'extractions liquide-liquide. Plus particulièrement, ce diluant organique est choisi dans le groupe constitué par le cyclopentane, le pentane, le cyclohexane, le n-hexane, le cycloheptane, le n-heptane, le n-octane, l'iso-octane, les nonanes ou les dodécanes, linéaires ou ramifiés (tels que le n-dodécane), l'hexadécane, l'éther de pétrole, le benzène, le n-butylbenzène, l'isobutylbenzène, le sec-butylbenzène, le tert-butylbenzène, le p-cymène, le triisopropylbenzène, le toluène, le xylène, les cumènes, le kérosène, le tétrapropylène hydrogéné (ou TPH), le diéthyl éther, le n-butyl acétate, l'isopropyl myristate et leurs mélanges.

Dans le procédé de séparation selon l'invention, le rapport volumique entre la phase aqueuse nitrique et la phase organique est compris entre 1/3 et 3, notamment entre 0,5 et 2 et, en particulier, de l'ordre de 1 (i.e. 1 ± 0,2). De plus, durant ce procédé, la mise en contact entre la phase aqueuse nitrique et la phase organique dure entre 15 min et 2 h, notamment entre 30 min et 90 min et, en particulier, de l'ordre de 60 min (i.e. 60 min ± 10 min).

Le procédé de séparation selon la présente invention est réalisé à une température généralement inférieure à 80°C, en particulier comprise entre 10°C et 70°C. Dans une forme de mise en oeuvre particulière, la température lors de ce procédé de séparation est la température ambiante. Par « température ambiante », on entend une température de 20°C ± 5°C.

La présente invention concerne un procédé de récupération sélective du palladium à partir d'une phase aqueuse nitrique qui contient, en plus du palladium, au moins un autre cation métallique dont la valence est supérieure ou égale à 2, ledit procédé comprenant la mise en oeuvre d'un procédé de séparation tel que précédemment défini.

Plus particulièrement, le procédé de récupération selon l'invention comprend les étapes suivantes :
a) éventuellement la dilution de la phase aqueuse nitrique qui contient, en plus du palladium, au moins un autre cation métallique dont la valence est supérieure ou égale à 2 de manière à ce que la concentration en acide nitrique contenue dans cette phase aqueuse nitrique après dilution soit au plus de 3 mol.L⁻¹ et notamment au plus de 2,5 mol.L⁻¹;
b) l'extraction du palladium de ladite phase aqueuse nitrique éventuellement diluée à l'étape (a), laquelle extraction comprend au moins une opération dans laquelle ladite phase aqueuse nitrique est mise en contact avec une phase organique non miscible à elle, contenant au moins un malonamide exempt d'atome de soufre en tant qu'extractant, puis séparée de cette phase organique ; et
c) la désextraction sélective du palladium présent dans la phase organique issue de l'étape b), laquelle désextraction comprend au moins une opération dans laquelle la phase organique issue de l'étape (b) est mise en contact avec une phase aqueuse, puis séparée de cette phase aqueuse.

L'étape (a) du procédé est optionnelle. En effet, si la concentration en acide nitrique de la phase aqueuse nitrique contenant du palladium et au moins un autre cation métallique dont la valence est supérieure ou égale à 2 est, avant la mise en oeuvre du procédé de récupération sélective selon l'invention, inférieure ou égale à 3 mol.L⁻¹ et notamment inférieure ou égale à 2,5 mol.L⁻¹, il n'est pas nécessaire d'encore diluer cette phase. Au contraire, si la concentration en acide nitrique est supérieure à 3 mol.L⁻¹ et notamment supérieure à 2,5 mol.L⁻¹, il convient de diluer la phase aqueuse nitrique par ajout d'eau pour ramener la concentration dans la gamme souhaitée.

Tout ce qui a été précédemment décrit pour le procédé de séparation s'applique *mutatis mutandis* à l'étape (b) du procédé de récupération selon l'invention.

L'étape (c) de désextraction est une étape classique des extractions liquide-liquide.

Dans un 1^{er} mode de réalisation de cette étape de désextraction, la phase aqueuse mise en oeuvre lors de l'étape (c) est une solution diluée d'acide de pH supérieur à 1. De nombreux acides peuvent convenir pour préparer une telle solution diluée d'acide, et à titre d'exemples non limitatifs on peut utiliser l'acide chlorhydrique, l'acide nitrique, ou l'acide sulfurique.

Dans un 2^{nd} mode de réalisation de cette étape de désextraction, la phase aqueuse utilisée contient un agent complexant du palladium propre à faciliter la migration en phase aqueuse du palladium contenu dans la phase organique suite à l'étape (b).

Avantageusement, cet agent complexant est choisi parmi les agents dont l'utilisation a déjà été proposée pour la réalisation d'extractions liquide-liquide. Un tel agent est typiquement capable de complexer le palladium contenu dans la phase organique obtenue suite à l'étape (b) du procédé. En particulier, cet agent complexant est choisi dans le groupe constitué par les composés à base de soufre tels que la thiourée, les sels de thiocyanate ou de thiosulfate, le métabisulfite de sodium ou de potassium ; les composés à base de chlorures comme l'acide chlorhydrique ou des solutions de chlorures de métal alcalin ; les composés azotés comme l'ammoniaque, les sels d'hydrazine, les sels d'hydroxylamine et leurs mélanges ; le chlorure d'ammonium ; les composés chélatants dérivés de polyacides carboxyliques comme l'acide oxalique, l'EDTA, l'HEDTA et leurs mélanges.

A titre d'exemples particuliers et non exhaustifs, la phase aqueuse utilisée lors de ce 2^{nd} mode de réalisation de cette étape de désextraction peut contenir de l'acide chlorhydrique à une concentration comprise entre 1 mol.L⁻¹ et 8 mol.L⁻¹ de phase aqueuse, et/ou de la thiourée en une quantité comprise entre 0,1 mol.L⁻¹ et 2 mol.L⁻¹ de phase aqueuse et/ou du thiosulfate en une quantité comprise entre 0,1 mol.L⁻¹ et 2 mol.L⁻¹ de phase aqueuse. Aussi, on peut employer une phase aqueuse à base d'ammoniaque, à une teneur comprise entre 1 et 4% (exemple ammoniaque 1 M).

Dans un 3^{ème} mode de réalisation de cette étape de désextraction et selon la nature (composition chimique) du flux aqueux utilisé dans l'étape (b), la phase organique obtenue après cette étape (b) peut être d'une pureté suffisante pour effectuer une récupération directe du palladium métal lors de l'étape (c). Dans ce cas, on utilise une phase aqueuse comprenant un réducteur du palladium qui permet la précipitation de palladium métal sous forme de colloïdes à l'interphase des deux phases. Ces particules peuvent alors être séparées par toute technique de séparation liquide-solide adaptée, connue de l'homme du métier, comme, par exemple, une filtration, ou une centrifugation. De nombreux agents réducteurs peuvent être utilisés dans ce 3^{ème} mode de réalisation. A titre d'exemples illustratifs et non limitatifs, on peut employer une solution d'hydrazine dans l'acide nitrique telle qu'une solution aqueuse d'acide nitrique diluée (0,1 M à 1 M) contenant de l'hydrazine 0,1 mol.L⁻¹ ou une solution de formate de sodium ou de potassium.

Dans l'étape (c) du procédé selon l'invention, le rapport volumique entre la phase aqueuse et la phase organique contenant le palladium est compris entre 1/3 et 3, notamment entre 0,5 et 2 et, en particulier, de l'ordre de 1 (i.e. 1 ± 0,2). De plus, la mise en contact la phase aqueuse et la phase organique contenant le palladium dure entre 5 min et 90 min, notamment entre 15 min et 60 min et, en particulier, de l'ordre de 30 min (i.e. 30 min ± 10 min).

L'étape (c) du procédé selon l'invention est réalisée à une température généralement inférieure à 50°C, en particulier inférieure à 40°C et, plus particulièrement, inférieure à 30°C. Avantageusement, la température lors de ce procédé de séparation est la température ambiante.

Suite à l'étape (c) du procédé selon l'invention et notamment suite aux 1^{er} et au 2^{nd} mode de réalisation, il est facile de récupérer le palladium présent dans la phase aqueuse. Il est, par exemple, possible de récupérer du palladium sous forme métallique en soumettant les cations Pd²⁺ présents dans la phase aqueuse obtenue suite à l'étape (c) à une réduction. Cette réduction peut être effectuée suivant les nombreuses techniques disponibles et connues. A titre d'exemples illustratifs et non limitatifs, on peut effectuer cette réduction par voie électrochimique, ou encore par ajout de réactifs chimiques ayant un caractère réducteur, comme les sels de bore (borates, borohydrures...), l'acide formique ou ses sels, l'hydrazine. Le palladium réduit est apte à précipiter dans la phase aqueuse et ce précipité peut être récupéré par toute technique de séparation liquide-solide adaptée, connue de l'homme du métier, comme, par exemple, une filtration, ou une centrifugation.

Il est aussi possible de récupérer le palladium(II) sous forme de précipité selon l'agent complexant obtenu (2^{nd} mode de réalisation de l'étape (c)). A titre d'exemples illustratifs et non limitatifs, on peut récupérer le palladium sous forme de précipité d'hydroxyde de palladium(II), de chlorure d'ammonium et de palladium(II), de sulfite de palladium(II), de disulfite de palladium(II) et de sodium ou de potassium. Dans ce dernier cas, on effectuera avantageusement une précipitation à l'aide de chlorure d'ammonium.

De plus, suite à l'étape (c) du procédé selon l'invention, la phase organique contenant au moins un malonamide exempt d'atome de soufre peut être récupérée et réutilisée et ce, notamment dans un procédé de récupération sélective du palladium tel que défini dans la présente invention.

D'autres caractéristiques et avantages de la présente invention apparaîtront encore à l'homme du métier à la lecture des exemples ci-dessous donnés à titre illustratif et non limitatif, en référence aux figures annexées.

### BRÈVE DESCRIPTION DES DESSINS

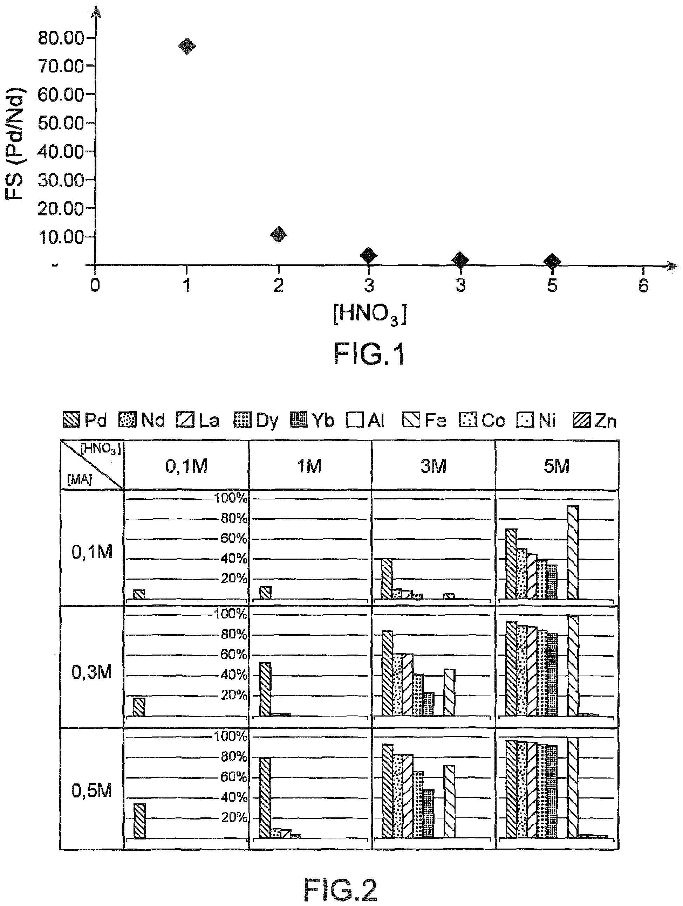

La Figure 1 présente le facteur de séparation entre le palladium et le néodyme en fonction de la concentration en acide nitrique dans la phase aqueuse nitrique mise en oeuvre dans un procédé de récupération selon l'invention utilisant comme extractant dans la phase organique du DMDOHEMA à une concentration de 0,3 M dans le n-heptane.
La Figure 2 présente les pourcentages d'extraction des différents cations métalliques initialement contenus dans une phase aqueuse nitrique, obtenus suite à la mise en oeuvre d'un procédé de récupération selon l'invention et ce, en fonction de la concentration en acide nitrique dans la phase aqueuse nitrique et de la concentration en DMDOHEMA dans la phase organique (diluant n-heptane).

### EXPOSÉ DÉTAILLÉ DE MODES DE RÉALISATION PARTICULIERS

### Séparation palladium/néodyme

Il est connu que la teneur en acide nitrique de la phase aqueuse facilite l'extraction des cations métalliques, probablement par formation d'une paire d'ions neutre, plus facile à extraire en phase organique qu'un ion chargé.

Ainsi, pour le palladium et les lanthanides, le coefficient de distribution (D) augmente avec la teneur en acide nitrique (ou en nitrate) de la phase aqueuse. Néanmoins, la relation entre D et teneur en acide nitrique n'est pas la même pour le palladium et les lanthanides, si bien que la sélectivité Pd/lanthanide n'est pas constante.

La Figure 1 présente le facteur de séparation obtenu par mise en oeuvre d'un procédé selon l'invention, entre le palladium et le néodyme (Nd) initialement contenus dans une phase aqueuse nitrique. Le néodyme a été pris comme métal de référence des lanthanides car il fait partie des lanthanides les plus faciles à extraire **[23].**

On constate donc que pour une concentration en HNO₃ inférieure à 2 mol.L⁻¹, la sélectivité Pd/Nd est supérieure à 10 et ce, en utilisant comme extractant dans la phase organique du DMDOHEMA à 0,3 mol.L⁻¹ et comme solvant du n-heptane Des résultats comparables ont été obtenus en remplaçant le solvant organique de la phase organique i.e. le n-heptane par du toluène.

### Séparation palladium/9 autres cations métalliques

Une solution aqueuse mère en milieu nitrique 1 M contenant 1000 mg/L de chacun des 10 cations métalliques suivants est préparée (métaux : Pd, Nd, lanthane (La), dysprosium (Dy), ytterbium (Yb), cobalt (Co), aluminium (Al), zinc (Zn), nickel (Ni) et fer (Fe)).

Différentes solutions organiques sont préparées. Chacune d'elles contient une certaine quantité de DMDOHEMA dans du n-heptane, les concentrations en DMDOHEMA étant de 0,1 M ; 0,3 M et 0,5 M.

Les phases organiques sont pré-équilibrées avec des phases aqueuses sans métal. Pour cela, chaque phase organique est mise en contact 1 heure avec une phase aqueuse d'acidité souhaitée pour l'extraction. Le volume aqueux et organique sont égaux. Les différentes concentrations en HNO₃ testées sont de 0,1 M ; 1 M ; 3 M et 5 M. Ainsi 12 pré-équilibres sont réalisés comme présenté dans le Tableau 1 ci-après :

**Tableau 1**

| | | [HNO₃] | | | |
|---|---|---|---|---|---|
| | | 0.1M | 1M | 3M | 5M |
| [DMDOHEMA] | 0.1M | **1** | **2** | **3** | **4** |
| | 0.3M | **5** | **6** | **7** | **8** |
| | 0.5M | **9** | **10** | **11** | **12** |

Les conditions sont numérotées de 1 à 12. Après 1 heure, les phases sont séparées.

Les extractions sont réalisées en mettant en contact les phases organiques pré-équilibrées avec les phases aqueuses contenant 100 mg/L de chaque métal (dilution 10 de la phase aqueuse mère) et en ajustant la concentration en acide nitrique à chaque condition opératoire. Les volumes des 2 phases sont égaux. L'extraction dure 1 heure.

Les phases sont ensuite séparées. Les phases organiques sont contre-extraites à l'aide d'une solution aqueuse de thiourée à 0,2 M, puis par une phase aqueuse d'HEDTA à 0,1 M. Le même volume de phase aqueuse et de phase organique est utilisé. Chaque contre-extraction dure 30 minutes. Les concentrations en métaux des différentes phases aqueuses (d'extraction ou de contre-extraction) sont dosées par une analyse par spectrométrie d'émission atomique à source plasma (ou ICP-AES pour « Inductively coupled plasma atomic emission spectroscopy »), et les données de pourcentage d'extraction sont reportées sur le graphique de la Figure 2 et regroupées dans le Tableau 2 suivant :

**Tableau 2**

| | **% extrait** | | | | | | | | | |
|---|---|---|---|---|---|---|---|---|---|---|
| **essai** | Pd | Nd | La | Dy | Yb | Al | Fe | Co | Ni | Zn |
| **1** | 8% | < LD | < LD | < LD | < LD | < LD | < LD | < LD | < LD | < LD |
| **2** | 12% | < LD | < LD | < LD | < LD | < LD | < LD | < LD | < LD | < LD |
| **3** | 40% | 9% | 8% | 5% | < LD | < LD | 4% | < LD | < LD | < LD |
| **4** | 70% | 50% | 45% | 39% | 34% | < LD | 93% | < LD | < LD | < LD |
| **5** | 17% | < LD | < LD | < LD | < LD | < LD | < LD | < LD | < LD | < LD |
| **6** | 52% | 2% | 1% | < LD | < LD | < LD | < LD | < LD | < LD | < LD |
| **7** | 84% | 61% | 61% | 41% | 23% | < LD | 45% | < LD | < LD | < LD |
| **8** | 93% | 89% | 88% | 85% | 82% | < LD | 99% | 2% | 1% | < LD |
| **9** | 34% | < LD | < LD | < LD | < LD | < LD | < LD | < LD | < LD | < LD |
| **10** | 79% | 9% | 8% | 3% | < LD | < LD | < LD | < LD | < LD | < LD |
| **11** | 93% | 82% | 82% | 66% | 47% | < LD | 72% | < LD | < LD | < LD |
| **12** | 96% | 95% | 94% | 92% | 91% | < LD | 100% | 4% | 2% | 2% |

Dans le tableau 2, le symbole < LD qui signifie inférieur à la limite de détection. Ces limites sont données pour chaque métal dans les conditions employées dans le Tableau 3 suivant :

**Tableau 3**

| Métal | Nd | La | Dy | Yb | Al | Fe | Co | Ni | Zn |
|---|---|---|---|---|---|---|---|---|---|
| LD (%extrait) | 0,22 | 0,17 | 1,20 | 0,84 | 1,08 | 0,60 | 0,60 | 0,72 | 0,72 |

### RÉFÉRENCES

**[1]** Kettler. Platinum group metals in catalysis: Fabrication of catalysts and catalyst precursors. Org. Proc. Res. Dev. 2003, 7, 342-354.
**> Poten** Kolarik, Renard. Potential applications of fission platinoids in industry. Platin. Met. Rev. 2005, 49, 79-90**.**
**[3]** Kolarik, Renard. Recovery of value fission platinoids from spent nuclear fuel - Part II: Separation processes Platinum Metals Review 2003, 47, 74-87.
**[4]** Tatarchuk, Druzhinina, Korda, Torgov. Complexation in the extraction of palladium with organic sulfides from acidic nitrate-nitrite solutions. Russ. J. Inorg. Chem. 2002, 47, 1917-1921.
**[5]** Tatarchuk, Druzhinina, Korda. Rhodium and palladium joint extraction by dihexyl sulfide and alkylanilinium nitrate mixtures from nitrate solutions. Russ. J. Inorg. Chem. 2009, 54, 1332-1338.
**[6]** Torgov, Us, Korda, Kostin, Tkachev, Drapailo. Extraction of palladium with acyclic analogs of thiacalix[4]arenes from nitric acid solutions. Russ. J. Inorg. Chem. 2013, 58, 1383-1389.
**[7]** Al-Bazi, Freiser. Mechanistic studies on the extraction of palladium(II) with dioctyl sulphide. Solv. Extr. Ion Exch. 1987, 5, 265-275.
**[8]** Raj, Dharmaraja, Panchanatheswaran, Venkatesan, Srinivasan, Rao. Extraction of fission palladium(II) from nitric acid by benzoylmethylene triphenylphosphorane (BMTPP). Hydrometallurgy 2006, 84, 118-124.
**[9]** Rizvi, Mathur, Murali, lyer. Recovery of fission product palladium from acidic high level waste solutions. Sep. Sci. Tech. 1996, 31, 1805-1816.
**[10]** Shukla, Singh, Sawant, Varadarajan. Liquid-liquid extraction of palladium(II) from nitric acid by bis(2-ethylhexyl) sulphoxide. Anal. Chim. Acta 1993, 276, 181-187.
**[11]** Dakshinamoorthy, Dhami, Naik, Dudwadkar, Munshi, Dey, Venugopal. Separation of palladium from high level liquid waste of PUREX origin by solvent extraction and precipitation methods using oximes. Desalination 2008, 232, 26-36.
**[12]** Mezhov, Druzhenkov, Sirotinin. Study of extraction of palladium from nitric acid solutions with nitrogen containing compounds, as applied to recovery to fission palladium from spent nuclear fuel of nuclear power plants. Optimization of extraction process for palladium recovery and refining. Radiochemistry, 2002, 44, 146-150.
**[13]** Gupta, Singh. Extraction and separation of platinum, palladium and rhodium using Cyanex 923 and their recovery from real samples. Hydrometallurgy 2013, 134, 11-18.
**[14]** Ahmed, Nayl, Daoud. Extraction of palladium from nitrate solution by CYANEX 471X. Int. J. Miner. Process. 2011, 101, 89-93.
**[15]** Hung, Watanabe, Kimura. Solvent extraction of palladium(II) with various ketones from nitric acid medium. Solv. Extr. Ion Exch. 2007, 25, 407-416.
**[16]** Ruhela, Sharma, Tomar, Murali, Hubli, Suri. Dithiodiglycolamide: novel ligand with highest selectivity and extractability for palladium. Tetrahedron Lett. 2011, 52, 3929-3932.
**[17]** Ruhela, Tomar, Singh, Sharma, Kumar, Bajaj, Adya, Seshagiri, Hubli, Suri. Stability studies of N,N,N ',N '-tetra-(2-ethylhexyl)dithiodiglycolamide (DTDGA). Radiochimica Acta 2013, 101, 169-174.
**[18]** Poirot, Bourgeois, Meyer. Palladium extraction by a malonamide derivative (DMDOHEMA) from nitrate media: extraction behavior and third phase characterization. Solv. Extr. Ion Exch. 2014, 1-14, DOI:10.1080/07366299.2014.908587.
**[19]** Sypula, Wilden, Schreinemachers, Malmbeck, Geist, Taylor, Modolo. Use of Polyaminocarboxylic Acids as Hydrophilic Masking Agents for Fission Products in Actinide Partitioning Processes. Solv. Extr. Ion Exch. 2012, 30, 748-764.
**[20]** Malik, Paiva. A Novel Solvent Extraction Route for the Mutual Separation of Platinum, Palladium, and Rhodium in Hydrochloric Acid Media. Solv. Extr. Ion Exch. 2010, 28, 49-72.
**[21]** Pearson. Hard and Soft Acids and Bases. J. Am. Chem. Soc. 1963, 85, 3533-3539.
**[22]** Jung, Park, An, Kim, Tran, Kim. Processing of high purity gold from scraps using diethylene glycol di-N-butyl ether (dibutyl carbitol). Hydrometallurgy, 2009, 95, 262-266.
**[23]** Gannaz, Chiarizia, Antonio, Hill, Cote. Extraction of lanthanides(III) and Am(III) by mixtures of malonamide and dialkylphosphoric acid. Solvent Extraction and Ion Exchange, 2007, 25, 313-337.

## Revendications

1. Procédé de séparation du palladium des autres éléments métalliques contenus dans une phase aqueuse nitrique consistant :
- à mettre en contact une phase aqueuse nitrique contenant, en plus du palladium, au moins un autre cation métallique dont la valence est supérieure ou égale à 2 avec une phase organique non miscible à l'eau puis
- à séparer la phase aqueuse nitrique et la phase organique dans laquelle du palladium a été extrait,
**caractérisé en ce que** ladite phase organique contient au moins un malonamide exempt d'atome de soufre en tant qu'extractant et **en ce que** ladite phase aqueuse nitrique contient au plus 2,5 mol.L⁻¹ d'acide nitrique.

2. Procédé selon la revendication 1, **caractérisé en ce que** la quantité d'acide nitrique dans la phase aqueuse nitrique est comprise entre 0,1 mol.L⁻¹ et 2 mol.L⁻¹.

3. Procédé selon la revendication 1 ou 2, **caractérisé en ce que** ladite phase aqueuse nitrique est issue du traitement des déchets d'équipements électriques et électroniques.

4. Procédé selon l'une quelconque des revendications 1 à 3, **caractérisé en ce que** ladite phase aqueuse nitrique contient, en plus de l'acide nitrique, au moins un autre acide notamment choisi dans le groupe constitué par l'acide chlorhydrique, l'acide bromhydrique, l'acide fluorhydrique et l'acide sulfurique.

5. Procédé selon l'une quelconque des revendications 1 à 4, **caractérisé en ce que** ledit malonamide exempt d'atome de soufre est un diamide substitué de formule (I) :
R¹(R²)N-C(=O)-CH(R³)-C(=O)-N(R⁴)R⁵ (I)
dans laquelle les groupements R¹, R², R³, R⁴ et R⁵, identiques ou différents, représentent un alkyle ou un hétéroalkyle exempt d'atome de soufre.

6. Procédé selon l'une quelconque des revendications 1 à 5, **caractérisé en ce que** ledit malonamide est choisi dans le groupe constitué par le *N,N*'-diméthyl-*N,N*'-dibutyltétradécylmalonamide (ou DMDBTDMA), le *N,N*'-diméthyl-*N,N'-*dioctylhexyléthoxymalonamide (ou DMDOHEMA), le *N,N'*-diméthyl-*N,N'-*dioctyloctylmalonamide (ou DMDOOMA), le *N,N'*-diméthyl-*N,N'*-dioctylhexylmalonamide (ou DMDOHxMA), le *N,N'*-diméthyl-*N,N'*-dioctylheptylmalonamide (ou DMDOHpMA) ou le *N,N'*-diméthyl-*N,N'*-dibutyl-dodécylmalonamide (ou DMDBDDEMA).

7. Procédé selon l'une quelconque des revendications 1 à 6, **caractérisé en ce que** ledit malonamide exempt d'atome de soufre est présent dans ladite phase organique en une quantité supérieure ou égale à 40 mM, notamment en une quantité supérieure ou égale à 60 mM, en particulier en une quantité comprise entre 80 mM et 2 M et, plus particulièrement, en une quantité comprise entre 100 mM et 1 M.

8. Procédé de récupération sélective du palladium à partir d'une phase aqueuse nitrique qui contient, en plus du palladium, au moins un autre cation métallique dont la valence est supérieure ou égale à 2, ledit procédé comprenant la mise en oeuvre d'un procédé de séparation tel que défini à l'une quelconque des revendications 1 à 7.

9. Procédé selon la revendication 8, **caractérisé en ce que** ledit procédé comprend les étapes suivantes :
a) éventuellement la dilution de la phase aqueuse nitrique qui contient, en plus du palladium, au moins un autre cation métallique dont la valence est supérieure ou égale à 2 de manière à ce que la concentration en acide nitrique contenue dans cette phase aqueuse nitrique après dilution soit au plus de 2,5 mol.L⁻¹ ;
b) l'extraction du palladium de ladite phase aqueuse nitrique éventuellement diluée à l'étape (a), laquelle extraction comprend au moins une opération dans laquelle ladite phase aqueuse nitrique est mise en contact avec une phase organique non miscible à elle, contenant au moins un malonamide exempt d'atome de soufre en tant qu'extractant, puis séparée de cette phase organique ; et
c) la désextraction sélective du palladium présent dans la phase organique issue de l'étape b), laquelle désextraction comprend au moins une opération dans laquelle la phase organique issue de l'étape (b) est mise en contact avec une phase aqueuse, puis séparée de cette phase aqueuse.

10. Procédé selon la revendication 9, **caractérisé en ce que** ladite phase aqueuse mise en oeuvre lors de ladite étape (c) est une solution diluée d'acide de pH supérieur à 1.

11. Procédé selon la revendication 9, **caractérisé en ce que** ladite phase aqueuse mise en oeuvre lors de ladite étape (c) comprend un agent complexant du palladium notamment choisi dans le groupe constitué par les composés à base de soufre tels que la thiourée, les sels de thiocyanate ou de thiosulfate, le métabisulfite de sodium ou de potassium ; les composés à base de chlorures comme l'acide chlorhydrique ou des solutions de chlorures de métal alcalin ; les composés azotés comme l'ammoniaque, les sels d'hydrazine, les sels d'hydroxylamine et leurs mélanges ; le chlorure d'ammonium ; les composés chélatants dérivés de polyacides carboxyliques comme l'acide oxalique, l'EDTA, l'HEDTA et leurs mélanges.

12. Procédé selon la revendication 9, **caractérisé en ce que** ladite phase aqueuse mise en oeuvre lors de ladite étape (c) comprend un réducteur du palladium.

## Patentansprüche

1. Verfahren zur Trennung von Palladium von den weiteren metallischen Elementen, die in einer wässrigen Salpeterphase enthalten sind, das darin besteht,
- eine wässrige Salpeterphase, enthaltend neben Palladium mindestens ein weiteres Metallkation mit einer Wertigkeit von größer oder gleich 2, mit einer mit Wasser nicht mischbaren organischen Phase in Kontakt zu bringen, dann
- die wässrige Salpeterphase und die organische Phase, aus der Palladium extrahiert wurde, zu trennen,
**dadurch gekennzeichnet, dass** die organische Phase mindestens ein schwefelatomfreies Malonamid als Extraktionsmittel enthält und dass die wässrige Salpeterphase höchstens 2,5 mol.L⁻¹ Salpetersäure enthält.

2. Verfahren nach Anspruch 1, **dadurch gekennzeichnet, dass** die Menge an Salpetersäure in der wässrigen Salpeterphase zwischen 0,1 mol.L⁻¹ und 2 mol.L⁻¹ beträgt.

3. Verfahren nach Anspruch 1 oder 2, **dadurch gekennzeichnet, dass** die wässrige Salpeterphase aus der Entsorgung von Elektro- und Elektronik-Altgeräten stammt.

4. Verfahren nach einem der Ansprüche 1 bis 3, **dadurch gekennzeichnet, dass** die wässrige Salpeterphase neben Salpetersäure mindestens eine weitere Säure, insbesondere ausgewählt aus der Gruppe bestehend aus Salzsäure, Bromwasserstoffsäure, Fluorwasserstoffsäure und Schwefelsäure, enthält.

5. Verfahren nach einem der Ansprüche 1 bis 4, **dadurch gekennzeichnet, dass** das schwefelatomfreie Malonamid ein substituiertes Diamid der Formel (I)
R¹(R²)N-C(=O)-CH(R³)-C(=O)-N(R⁴)R⁵ (I)
ist, worin die identischen oder unterschiedlichen Gruppen R¹, R², R³, R⁴ und R⁵ ein schwefelatomfreies Alkyl oder Heteroalkyl darstellen.

6. Verfahren nach einem der Ansprüche 1 bis 5, **dadurch gekennzeichnet, dass** das Malonamid ausgewählt ist aus der Gruppe bestehend aus N,N'-Dimethyl-N.N'-Dibutyltetradecylmalonamid (oder DMDBTDMA), N,N'-Dimethyl-N,N'-Dioctylhexylethoxymalonamid (oder DMDOHEMA), N,N'-Dimethyl-N,N'-Dioctyloctylmalonamid (oder DMDOOMA), N,N'-Dimethyl-N,N'-Dioctylhexylmalonamid (oder DMDOHxMA), N,N'-Dimethyl-N,N'-Dioctylheptylmalonamid (oder DMDOHpMA) oder N,N'-Dimethyl-N,N'-Dibutyl-dodecylmalonamid (oder DMDBDDEMA).

7. Verfahren nach einem der Ansprüche 1 bis 6, **dadurch gekennzeichnet, dass** das schwefelatomfreie Malonamid in einer Menge größer oder gleich 40 mM, insbesondere in einer Menge größer oder gleich 60 mM, insbesondere in einer Menge zwischen 80 mM und 2 M, insbesondere in einer Menge zwischen 100 mM und 1 M, in der organischen Phase vorhanden ist.

8. Verfahren zur selektiven Gewinnung von Palladium ausgehend von einer wässrigen Salpeterphase, enthaltend neben Palladium mindestens ein weiteres Metallkation mit einer Wertigkeit von größer oder gleich 2, wobei das Verfahren das Durchführen eines Trennverfahrens umfasst, wie es in einem der Ansprüche 1 bis 7 definiert ist.

9. Verfahren nach Anspruch 8, **dadurch gekennzeichnet, dass** das Verfahren die nachfolgenden Schritte umfasst:
a) gegebenenfalls Verdünnen der wässrigen Salpeterphase, enthaltend neben Palladium mindestens ein weiteres Metallkation mit einer Wertigkeit von größer oder gleich 2, so dass die Konzentration der in dieser wässrigen Salpeterphase enthaltenen Salpetersäure nach der Verdünnung höchstens 2,5 mol.L⁻¹ beträgt;
b) Extraktion von Palladium aus der gegebenenfalls in Schritt (a) verdünnten wässrigen Salpeterphase, wobei die Extraktion zumindest einen Vorgang umfasst, bei dem die wässrige Salpeterphase mit einer nicht damit mischbaren organischen Phase in Kontakt gebracht wird, die zumindest ein schwefelatomfreies Malonamid als Extraktionsmittel enthält, und dann von dieser organischen Phase getrennt wird; und
c) selektive Rückextraktion von Palladium, das in der aus Schritt b) resultierenden organischen Phase vorliegt, wobei die Rückextraktion zumindest einen Vorgang umfasst, bei dem die aus Schritt (b) resultierende organische Phase mit einer wässrigen Phase in Kontakt gebracht und dann von dieser wässrigen Phase getrennt wird.

10. Verfahren nach Anspruch 9, **dadurch gekennzeichnet, dass** die in Schritt (c) eingesetzte wässrige Phase eine verdünnte Säurelösung mit einem pH-Wert von über 1 ist.

11. Verfahren nach Anspruch 9, **dadurch gekennzeichnet, dass** die in Schritt (c) eingesetzte wässrige Phase einen Palladium-Komplexbildner enthält, ausgewählt insbesondere aus der Gruppe bestehend aus Verbindungen auf Schwefelbasis, wie Thioharnstoff, Thiocyanat- oder Thiosulfatsalze, Natrium- oder Kaliummetabisulfit; Verbindungen auf Chloridbasis, wie Salzsäure oder Lösungen von Alkalimetallchloriden; Stickstoffverbindungen wie Ammoniak, Hydrazinsalze, Hydroxylaminsalze und deren Gemische; Ammoniumchlorid; chelatbildenden Verbindungen, die von Polycarbonsäuren abgeleitet sind, wie Oxalsäure, EDTA, HEDTA und deren Gemische.

12. Verfahren nach Anspruch 9, **dadurch gekennzeichnet, dass** die in Schritt (c) eingesetzte wässrige Phase ein Palladium-Reduktionsmittel enthält.

## Claims

1. A process for separating palladium from other metal elements contained in a nitric aqueous phase consisting in:
- contacting a nitric aqueous phase containing, in addition to palladium, at least one other metal cation the valence of which is higher than or equal to 2 with a water immiscible organic phase and then
- separating the nitric aqueous phase and the organic phase in which palladium has been extracted,
**characterised in that** said organic phase contains at least one sulfur atom-free malonamide as an extractant and **in that** said nitric aqueous phase contains at most 2.5 mol.L⁻¹ of nitric acid.

2. The process according to claim 1, **characterised in that** the amount of nitric acid in the nitric aqueous phase is between 0.1 mol.L⁻¹ and 2 mol.L⁻¹.

3. The process according to claim 1 or 2, **characterised in that** said nitric aqueous phase comes from treatment of waste electric and electronic equipment.

4. The process according to any of claims 1 to 3, **characterised in that** said nitric aqueous phase contains, in addition to the nitric acid, at least one other acid in particular chosen from the group consisting of hydrochloric acid, hydrobromic acid, hydrofluoric acid and sulfuric acid.

5. The process according to any of claims 1 to 4, **characterised in that** said sulfur atom-free malonamide is a substituted diamide having the formula (I):
R¹(R²)N-C(=O)-CH(R³)-C(=O)-N(R⁴)R⁵ (i)
wherein the groups R¹, R², R³, R⁴ and R⁵, being identical or different, represent a sulfur atom-free alkyl or heteroalkyl.

6. The process according to any of claims 1 to 5, **characterised in that** said malonamide is chosen from the group consisting of *N,N'*-dimethyl-*N,N'-*dibutyltetradecylmalonamide (or DMDBTDMA), *N,N'-*dimethyl-*N,N*'-dioctylhexylethoxymalonamide (or DMDOHEMA), *N,N*'-dimethyl-*N,N'*-dioctyloctylmalonamide (or DMDOOMA), *N,N'*-dimethyl-*N,N'*-dioctylhexylmalonamide (or DMDOHxMA), *N,N'*-dimethyl-*N,N'-*dioctylheptylmalonamide (or DMDOHpMA) or *N,N'*-dimethyl-*N,N*'-dibutyl-dodecylmalonamide (or DMDBDDEMA).

7. The process according to any of claims 1 to 6, **characterised in that** said sulfur atom-free malonamide is present in said organic phase in an amount higher than or equal to 40 mM, notably in an amount higher than or equal to 60 mM, in particular in an amount between 80 mM and 2 M and, more particularly, in an amount between 100 mM and 1 M.

8. A process for selectively recovering palladium from a nitric aqueous phase which contains, in addition to palladium, at least one other metal cation the valence of which is higher than or equal to 2, said process comprising implementing a separation process as defined in any of claims 1 to 7.

9. The process according to claim 8, **characterised in that** said process comprises the following steps:
a) optionally diluting the nitric aqueous phase which contains, in addition to palladium, at least one other metal cation the valence of which is higher than or equal to 2 such that the concentration of nitric acid contained in this nitric aqueous phase after dilution is at most 2.5 mol.L⁻¹;
b) extracting palladium from said nitric aqueous phase optionally diluted in step (a), said extracting comprises at least one operation in which said nitric aqueous phase is contacted with an organic phase immiscible with it, containing at least one sulfur atom-free malonamide as an extractant, and then separated from this organic phase; and
c) selectively de-extracting palladium present in the organic phase from step (b), said de-extracting comprises at least one operation in which the organic phase from step (b) is contacted with an aqueous phase, and then separated from this aqueous phase.

10. The process according to claim 9, **characterised in that** said aqueous phase implemented during step (c) is a diluted acid solution with a pH higher than 1.

11. The process according to claim 9, **characterised in that** said aqueous phase implemented during step (c) comprises a palladium complexing agent in particular chosen from the group consisting of sulfur based compounds such as thiourea, thiocyanate or thiosulfate salts, sodium or potassium metabisulfite; chloride-based compounds such as hydrochloride acid or solutions of alkaline metal chlorides; nitrogen compounds as ammonia, hydrazine salts, hydroxylamine salts and mixtures thereof; ammonium chloride; chelating compounds derived from polycarboxylic acids such as oxalic acid, EDTA, HEDTA and mixtures thereof.

12. The process according to claim 9, **characterised in that** said aqueous phase implemented during step (c) comprises a palladium reducer.
